# EUROPÄISCHE PATENTSCHRIFT

(11) **EP 1 517 814 B1**
(45) Veröffentlichungstag und Bekanntmachung des Hinweises auf die Patenterteilung: **15.02.2006**
(21) Anmeldenummer: 03732384.7
(22) Anmeldetag: 15.05.2003
(51) Int. Cl.: B60R 19/24, B60R 19/34, B62D 21/15

(54) **STOSSFÄNGERTRAGSTRUKTUR EINES KRAFTFAHRZEUGES**
BUMPER-SUPPORTING STRUCTURE OF A MOTOR VEHICLE
STRUCTURE PORTEUSE A PARE-CHOCS DE VEHICULE AUTOMOBILE

(30) Priorität: 28.06.2002 DE 10229600
(43) Veröffentlichungstag der Anmeldung: 30.03.2005
(73) Patentinhaber: DaimlerChrysler AG, 70567 Stuttgart (DE)
(72) Erfinder: BECHTOLD, Michael, 71297 Mönsheim (DE); KURZ-RITTER VON SPORSCHILL, Achim, 73630 Remshalden (DE); SCHMID, Klaus-Erik, 73230 Kirchheim (DE); TEBBE, Martin, 70076 Tübingen (DE); STEINMETZ, Gregor, 70563 Stuttgart (DE)
(86) Internationale Anmeldenummer: PCT/EP2003/005096
(87) Internationale Veröffentlichungsnummer: WO 2004/002782

(56) Entgegenhaltungen:
- EP-A- 0 434 240
- DE-A- 19 600 933
- GB-A- 1 337 774
- US-A- 4 714 287
- US-A- 6 007 123

## Beschreibung

Die Erfindung betrifft eine Tragstruktur für ein Kraftfahrzeug, insbesondere für einen Personenkraftwagen, mit den Merkmalen des Oberbegriffs des Anspruchs 1.

DE 19600933A1 wird als nächstliegender Stand der Technik angesehen und offenbart eine Tragstruktur mit den Merkmalen des Oberbegriffs des Anspruchs 1.

Eine andere Tragstruktur der eingangs genannten Art ist beispielsweise aus der EP 0 434 240 B1 bekannt und weist eine Längsträgeranordnung mit zwei parallel zur Fahrzeuglängsrichtung verlaufenden, in horizontaler Richtung voneinander beabstandeten Längsträgern auf, wobei die Längsträger bei der bekannten Tragstruktur relativ weit außen, also entlang der Fahrzeugaußenseite angeordnet sind. An einem vorderen oder hinteren Längsende der Längsträgeranordnung ist eine Stoßfängeranordnung angebracht, die - von außen nach innen - eine Stoßfängerverkleidung, einen Biegeträger und einen Querträger aufweist. Der Biegeträger ist nach außen hin konvex gewölbt bzw. zum Querträger hin konkav gewölbt. Der Biegeträger ist an den seitlichen Enden des Querträgers befestigt. Der Querträger ist seinerseits mit seinen seitlichen Enden an axialen Enden der beiden Längsträger der Längsträgeranordnung befestigt. Zwischen der Stoßfängerverkleidung und dem Biegeträger können im Bereich der seitlichen Enden des Biegeträgers energieabsorbierende Schaumstoffkörper angeordnet sein.

Aus der DE 31 25 650 C2 ist eine Stoßfängeranordnung bekannt, die einen an Fahrzeuglängsträgern abgestützten Biegeträger und beabstandet davon einen vorgelagerten, gegenüber dem Biegeträger gehalterten Zusatzbiegeträger aufweist. Der Zusatzbiegeträger trägt außen eine Stoßfängerverkleidung und innen einen energieabsorbierenden Schaumkörper, der so am Zusatzbiegeträger angeordnet ist, dass zwischen dem Biegeträger und dem Schaumkörper in Fahrzeuglängsrichtung ein Abstand vorliegt. Wie der Biegeträger an den Längsträgern angebracht ist, geht aus diesem Dokument nicht hervor.

Die DE 36 39 195 A1 zeigt eine weitere Stoßfängeranordnung mit einem Querträger, einem Biegeträger und einer Stoßfängerverkleidung. Der Querträger ist an vorderen Längsträgern einer Längsträgeranordnung des Fahrzeugs befestigt. In dem Bereich, in dem der Querträger an den Längsträgern befestigt ist, erfolgt auch die Befestigung des Biegeträgers am Querträger. Die Stoßfängerverkleidung ist ihrerseits am Biegeträger angebracht. Auch bei dieser Ausführungsform ist zwischen dem Biegeträger und dem Querträger ein energieabsorbierender Schaumkörper angeordnet.

Die DE 42 23 948 C2 zeigt eine Längsträgeranordnung aus zwei parallel zueinander verlaufenden und horizontal voneinander beabstandeten Längsträgern, an deren axialen Enden ein Querträger angeflanscht ist. In axialer Verlängerung der Längsträger sind am Querträger Pralldämpfer befestigt, über die sich ein dem Querträger vorgelagerter Biegeträger am Querträger abstützt.

Den bekannten Tragstrukturen ist somit gemeinsam, dass sich der Biegeträger jeweils an den Stellen am Querträger abstützt, an denen auch die Längsträger der Längsträgeranordnung am Querträger abgestützt sind. Hierdurch wird eine möglichst biegefreie Kraftübertragung zwischen Biegeträger und Längsträgerstruktur erreicht.

Bei Fahrzeugen, bei denen die Längsträgeranordnung etwa in der Fahrzeugmitte angeordnet ist (vgl. z.B. DE-PS 883 846), führt eine derartige Konstruktion schon bei relativ kleinen, an den seitlich außenliegenden Enden des Biegeträgers wirkenden Belastungen zu bleibenden Verformungen, also Beschädigungen des Biegeträgers bzw. des Querträgers. Es ist jedoch wünschenswert, dass bestimmte, insbesondere normierte, zulässige Belastungsfälle, sogenannte "Pendelschläge" keine bleibenden Schäden am Fahrzeug hinterlassen. Dies ist beispielsweise zur Erfüllung gesetzlicher Normen und/oder für eine niedrige Einstufung in den Schadensklassen der Fahrzeugversicherer erforderlich.

Die vorliegende Erfindung beschäftigt sich daher mit dem Problem, für eine Tragstruktur der eingangs genannten Art eine Ausführungsform anzugeben, die bei einem Fahrzeug mit mittig angeordneter Längsträgeranordnung die Gefahr einer bleibenden Beschädigung der Stoßfängeranordnung bei kleineren, zulässigen Belastungen reduziert.

Dieses Problem wird erfindungsgemäß durch eine Tragstruktur mit den Merkmalen des Anspruchs 1 gelöst. Vorteilhafte Ausführungsformen sind Gegenstand der abhängigen Ansprüche.

Die Erfindung beruht auf dem allgemeinen Gedanken, den Querträger einerseits an seinen seitlichen, außenliegenden Enden mit dem Biegeträger zu verbinden und andererseits zwischen seinen Enden in einem mittleren Abschnitt über zwei Längsträgerteile in Fahrzeuglängsrichtung an der Längsträgeranordnung abzustützen. Dabei ist der Biegeträger nur im Bereich seiner seitlichen Enden am Querträger befestigt. Durch diese Bauweise sind zwischen den Enden des Querträgers Relativbewegungen zwischen Querträger und Biegeträger möglich, was bei einer an einem der Enden des Querträgers angreifenden, vom Biegeträger weggerichteten Biegebelastung des Querträgers dazu führt, dass der Biegeträger auf Zug beansprucht wird, wodurch sich die Steifigkeit der Anordnung deutlich erhöht. Dies hat zur Folge, dass relativ hohe Kräfte aufgebracht werden können, ohne dass es zu bleibenden Verformungen der Stoßfängeranordnung kommt. Darüber hinaus hat sich gezeigt, dass auch eine mittig angreifende Belastung besonders gut schadensfrei abgestützt werden kann, da der Biegeträger bei einer solchen Belastung innerhalb seines Elastizitätsbereichs am Querträger zur Anlage kommt, der sich seinerseits in der Nähe der Kraftangriffsstelle in deren Richtung über die Längsträgerteile an der Längsträgeranordnung abstützt. Dementsprechend können auch hier relativ große Kräfte schadensfrei aufgenommen werden.

Entsprechend einer bevorzugten Ausführungsform kann sich der Biegeträger zumindest im Mittelabschnitt, in dem sich die Längsträgerteile am Querträger abstützen, über wenigstens einen energieabsorbierenden Schaumkörper am Querträger abstützen. Durch diese Maßnahme werden die Relativbewegungen zwischen Biegeträger und Querträger bedämpft, wodurch die Personenschutzwirkung der Stoßfängeranordnung verbessert ist.

Bei einer anderen Weiterbildung können die Längsträgerteile an ihrem vom Querträger abgewandten Enden über eine Lagerkonsole aneinander und an der Längsträgeranordnung befestigt sein. Durch diese Konsole kann eine Art Schnittstelle für die Anbindung der Stoßfängeranordnung an die Längsträgeranordnung gebildet werden. Die Konsole kann außerdem als sogenanntes "Crashelement" ausgebildet werden, um dadurch im Crashfall energieabsorbierend zu wirken.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

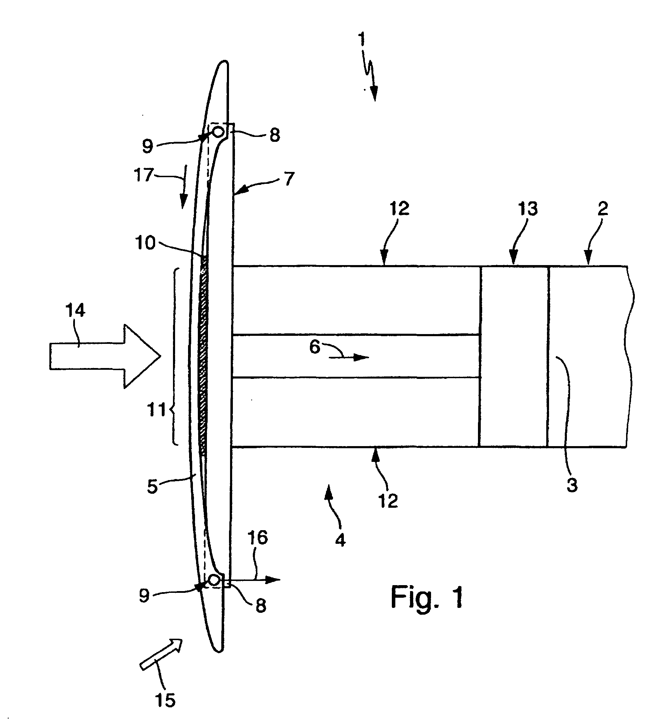

Die einzige Fig. 1 zeigt eine stark schematisierte Ansicht auf einen Endabschnitt einer erfindungsgemäßen Tragstruktur.

Entsprechend Fig. 1 weist eine erfindungsgemäße Tragstruktur 1 eines Kraftfahrzeugs, insbesondere eines Personenkraftwagens, eine Längsträgeranordnung 2 auf, die bezüglich des Fahrzeugs etwa mittig angeordnet ist. Das bedeutet insbesondere, dass die Längsträgeranordnung 2 keine im Bereich der Außenseite des Fahrzeugs, insbesondere im Schwellerbereich, verlaufende Längsträger besitzt. An einem hier gezeigten Längsende 3, das vorzugsweise dem Fahrzeugheck zugeordnet ist, trägt die Längsträgeranordnung 2 eine Stoßfängeranordnung 4. Diese Stoßfängeranordnung 4, die vorzugsweise als Heckstoßfängeranordnung ausgebildet ist, weist einen von der Längsträgeranordnung 2 abgewandten Biegeträger 5 auf, der sich im wesentlichen quer zu einer Fahrzeuglängsrichtung erstreckt, wobei die Fahrzeuglängsrichtung bzw. die Fahrtrichtung in Fig. 1 durch einen Pfeil 6 symbolisiert ist.

An seiner der Längsträgeranordnung 2 zugewandten Innenseite ist der Biegeträger 5 an einem Querträger 7 befestigt. Diese Befestigung erfolgt dabei jeweils im Bereich seitlicher Enden 8 des Querträgers 7, wobei eine Ausführungsform bevorzugt wird, bei der die Befestigung so erfolgt, dass der Biegeträger 5 im Bereich der mit 9 bezeichneten Befestigungen jeweils um eine vertikale Achse drehbar am Querträger 7 gelagert ist. Diese Drehachsen verlaufen hier senkrecht zur Zeichnungsebene.

Der Biegeträger 5 kann außerdem an seiner von der Längsträgeranordnung 2 abgewandten Außenseite eine hier nicht dargestellte Stoßfängerverkleidung tragen. Der Biegeträger 5 ist vorzugsweise nach außen leicht konvex gekrümmt bzw. zum Querträger 7 hin konkav geformt, während der Querträger 7 relativ geradlinig ausgebildet ist, so dass zumindest zwischen den Anbindungsstellen 9 in der Fahrzeuglängsrichtung 6 ein Abstand zwischen Biegeträger 5 und Querträger 7 vorliegt.

Bei einer besonderen Ausführungsform kann zwischen dem Biegeträger 5 und dem Querträger 7 ein energieabsorbierender Schaumkörper 10 angeordnet sein, über den sich der Biegeträger 5 in Fahrtrichtung 6 am Querträger 7 abstützt.

Der Querträger 7 weist zwischen seinen Enden 8 einen durch eine geschweifte Klammer gekennzeichneten Mittelabschnitt 11 auf, in dem an einer vom Biegeträger 5 abgewandten Seite zwei Längsträgerteile 12 am Querträger 7 befestigt sind. Wie aus Fig. 1 hervorgeht, erstreckt sich der Mittelabschnitt 11 des Querträgers 7 etwa über ein Drittel der gesamten, quer zur Fahrzeuglängsrichtung 6 verlaufenden Erstreckung des Querträgers 7. Die Längsträgerteile 12 verlaufen vorzugsweise parallel zueinander und parallel zur Fahrzeuglängsrichtung 6. Desweiteren sind die beiden Längsträgerteile 12 zweckmäßig in horizontaler Richtung nebeneinander und zueinander beabstandet angeordnet. Bei der hier gezeigten Ausführungsform stützen sich die beiden Längsträgerteile 12 in Fahrzeuglängsrichtung 6 über eine Lagerkonsole 13, also indirekt an der Längsträgeranordnung 2 ab. Über diese Lagerkonsole 13 sind die beiden Längsträgerteile 12 außerdem aneinander befestigt. Die Lagerkonsole 13 ist zweckmäßig als Crashelement ausgebildet. Desweiteren vereinfacht die Lagerkonsole 13 eine modulartige Bauweise für die Stoßfängeranordnung 4, die komplett vormontierbar ist und über die als Schnittstelle konzipierte Lagerkonsole 13 an die Längsträgeranordnung 2 anschließbar ist.

Die erfindungsgemäße Tragstruktur 1 arbeitet wie folgt:

Bei einer parallel zur Fahrzeuglängsrichtung 6 verlaufenden, zentral auf den Biegeträger 5 einwirkenden und in Fig. 1 durch einen Pfeil symbolisierten Zentralkraft 14 wird der Biegeträger 5 zunächst auf Biegung beansprucht. Hierdurch kommt es zu einer Relativbewegung des Biegeträgers 5 relativ zum Querträger 7, bei der sich der Biegeträger 5 dem Querträger 7 annähert. Sofern zwischen dem Biegeträger 5 und dem Querträger 7 der Schaumkörper 10 angeordnet ist, wird bei dieser Annäherung bereits Energie absorbiert. Die Kraftübertragung im Bereich der außenliegenden Enden 8 des Querträgers 7 ist dabei relativ gering. Der Hauptanteil der zwischen Biegeträger 5 und Querträger 7 übertragenden Kräfte wird zentral im Bereich der Krafteinleitung übertragen entweder über den zwischengeschaltenden Schaumkörper 10 oder spätestens dann, wenn der Biegeträger 5 aufgrund seiner Biegeverformung am Querträger 7 zur Anlage kommt. Da diese Zentralkraft 14 im Mittelabschnitt 11 des Querträgers 7 angreift, kann diese relativ direkt über die Längsträgerteile 12 und die Lagerkonsole 13 an der Längsträgeranordnung 2 abgestützt werden. Aufgrund der hohen Steifigkeit der Stoßfängeranordnung 4 im Mittelabschnitt 11 des Querträgers 7 können bleibende Verformungen für relativ hohe, zulässige Mißbrauchskräfte vermieden werden.

Wenn im Bereich eines seitlichen Endes 8 eine durch einen Pfeil symbolisierte Eckkraft 15 am Biegeträger 5 angreift, wird diese zunächst über die Anbindungsstelle 9 direkt auf den Querträger 7 übertragen, wodurch dieser in Richtung eines Pfeils 16 auf Biegung belastet wird. Bei dieser Biegebelastung des Querträgers 7 kommt es zu einer Streckung des Biegeträgers 5, so dass dieser entsprechend einem Pfeil 17 auf Zug beansprucht wird. Sofern zwischen dem Biegeträger 5 und dem Querträger 7 der Schaumkörper 10 angeordnet ist, wird die Streckbewegung des Biegeträgers 5 außerdem energieabsorbierend gedämpft, da sich der Biegeträger 5 bei seiner Streckung dem Querträger 7 annähert. Durch die hier gewählte Formgebung des Biegeträgers 5 mit einer relativ geringen Krümmung gegenüber dem Querträger 7 kann für die Biegeverformung des Querträgers 7 ein progressiver Anstieg der Zugbelastung 17 im Biegeträger 5 erreicht werden, wodurch relativ hohe Steifigkeitswerte für den Querträger 7 erreicht werden, so dass auch relativ hohe zulässige Eckkräfte 15 schadensfrei aufgenommen werden können. Die Abstützung der Eckkraft 15 an der Längsträgeranordnung 2 erfolgt dabei wieder über die Längsträgerteile 12 und die Lagerkonsole 13.

Von besonderer Bedeutung ist hierbei, dass der Biegeträger 5 ausschließlich im Bereich der seitlich Enden 8 des Querträgers 7 am Querträger 7 fixiert ist, während der Biegeträger 5 zwischen diesen Anbindungsstellen 9 relativ zum Querträger 7 beweglich ist. Dies gilt insbesondere auch dann, wenn zwischen Biegeträger 5 und Querträger 7 der Schaumkörper 10 angeordnet ist.

## Patentansprüche

1. Tragstruktur eines Kraftfahrzeugs, insbesondere eines Personenkraftwagens, mit einer Längsträgeranordnung (2), an der an wenigstens einem Längsende (3) eine Stoßfängeranordnung (4) angebracht ist, die einen Querträger (7) aufweist,
- wobei der Querträger (7) über zwei Längsträgerteile (12) axial an der Längsträgeranordnung (2) abgestützt ist,
- wobei die Längsträgerteile (12) in einem von den Enden (8) des Querträgers (7) beabstandeten Mittelabschnitt (11) des Querträgers (7) befestigt sind,
- wobei die Längsträgerteile (12) an ihren vom Querträger (7) abgewandten Enden über eine Lagerkonsole (13) aneinander und an der Längsträgeranordnung (2) befestigt sind,
- wobei die Lagerkonsole (13) als Crashelement ausgebildet ist, das im Crashfall energieabsorbierend wirkt,
**dadurch gekennzeichnet,**
- **dass** die Stoßfängeranordnung (4) einen an den Enden (8) des Querträgers (7) befestigten Biegeträger (5) aufweist,
- **dass** der Biegeträger (5) zumindest im Mittelabschnitt (11) über wenigsten einen energieabsorbierenden Schaumkörper (10) am Querträger (7) abgestützt ist.

2. Tragstruktur nach Anspruch 1,
**dadurch gekennzeichnet,**
**dass** die Längsträgerteile (12) parallel zur Längsrichtung (6) des Fahrzeugs und in horizontaler Richtung beabstandet zueinander verlaufen.

3. Tragstruktur nach Anspruch 1 oder 2,
**dadurch gekennzeichnet,**
**dass** die Längsträgeranordnung (2) im wesentlichen in der Fahrzeugmitte angeordnet ist.

4. Tragstruktur nach einem der Ansprüche 1 bis 3,
**dadurch gekennzeichnet,**
**dass** der Biegeträger (5) an seinen Enden um vertikale Achsen drehbar am Querträger (7) gelagert ist.

5. Tragstruktur nach einem der Ansprüche 1 bis 4,
**dadurch gekennzeichnet,**
**dass** der Biegeträger (5) ausschließlich an seinen Enden am Querträger (7) befestigt ist.

## Revendications

1. Structure porteuse d'un véhicule automobile, notamment d'un véhicule léger, comprenant un agencement de support longitudinal (2) sur lequel est monté un agencement de pare-chocs (4) au niveau d'au moins une extrémité longitudinale (3), lequel présente un support transversal (7),
- le support transversal (7) étant supporté par le biais de deux parties de support longitudinal (12) axialement sur l'agencement de support longitudinal (2),
- les parties de support longitudinal (12) étant fixées dans une portion centrale (11) du support transversal (7) espacée des extrémités (8) du support transversal (7),
- les parties de support longitudinal (12) étant fixées l'une à l'autre et à l'agencement de support longitudinal (2) au niveau de leurs extrémités opposées au support transversal (7) par le biais d'une console d'appui (13),
- la console d'appui (13) étant réalisée sous forme d'élément de collision qui agit en absorbant l'énergie en cas de collision,
**caractérisée en ce que**
- l'agencement de pare-chocs (4) présente un support flexible (5) fixé aux extrémités (8) du support transversal (7),
- **en ce que** le support flexible (5) est supporté sur le support transversal (7) au moins dans la portion centrale (11) par le biais d'au moins un corps en mousse absorbant l'énergie (10).

2. Structure porteuse selon la revendication 1,
**caractérisée en ce que**
les parties de support transversal (12) s'étendent parallèlement à la direction longitudinale (6) du véhicule et de manière espacée l'une de l'autre dans la direction horizontale.

3. Structure porteuse selon la revendication 1 ou 2,
**caractérisée en ce que**
l'agencement de support longitudinal (2) est disposé essentiellement au milieu du véhicule.

4. Structure porteuse selon l'une quelconque des revendications 1 à 3,
**caractérisée en ce que**
le support flexible (5) est monté sur le support transversal (7) de manière à pouvoir tourner au niveau de ses extrémités autour d'axes verticaux.

5. Structure porteuse selon l'une quelconque des revendications 1 à 4,
**caractérisée en ce que**
le support flexible (5) est fixé au support transversal (7) exclusivement à ses extrémités.

## Claims

1. Supporting structure for a motor vehicle, in particular an automobile, having a longitudinal beam arrangement (2), to at least one longitudinal end (3) of which a bumper arrangement (4) is attached, which has a crossbeam (7)
- the crossbeam (7) in an axial direction resting against the longitudinal beam arrangement (2) by way of two longitudinal beam parts (12),
- the longitudinal beam parts (12) being attached to a central section (11) of the crossbeam (7) which is located at a distance from the ends (8) of the crossbeam (7),
- the longitudinal beam parts (12) at their ends remote from the crossbeam (7) being attached by way of a bearing bracket (13) to one another and to the longitudinal beam arrangement (2),
- the bearing bracket (13) taking the form of a crash element, which exercises an energy-absorbing effect in the event of crash,
**characterized in that**
- the bumper arrangement (4) has a bending beam (5) attached to the ends (8) of the crossbeam (7),
- the bending beam (5), at least in the central section (11), rests on the crossbeam (7) by way of at least one energy-absorbing foam body (10).

2. Supporting structure according to Claim 1, **characterized in that** the longitudinal beam parts (12) run parallel to the longitudinal direction (6) of the vehicle and at a distance from one another in the horizontal direction.

3. Supporting structure according to Claim 1 or 2, **characterized in that** the longitudinal beam arrangement (2) is arranged essentially in the centre of the vehicle.

4. Supporting structure according to any one of Claims 1 to 3, **characterized in that** the bending beam (5) is supported at its ends on the crossbeam (7) such that it can rotate about vertical axes.

5. Supporting structure according to any one of Claims 1 to 4, **characterized in that** the bending beam (5) is attached exclusively at its ends to the crossbeam (7) .
